Europäisches Patentamt

European Patent Office

Office européen des brevets

(11) Publication number: **0 188 804**
**A2**

# EUROPEAN PATENT APPLICATION

(21) Application number: **85116484.8**

(22) Date of filing: **23.12.85**

(51) Int. Cl.⁴: **G 03 B 33/06**

(30) Priority: **21.01.85 JP 7453/85**

(43) Date of publication of application: **30.07.86**
**Bulletin 86/31**

(84) Designated Contracting States: **DE FR GB**

(71) Applicant: **CASIO COMPUTER COMPANY LIMITED,
6-1, 2-chome, Nishi-Shinjuku, Shinjuku-ku Tokyo (JP)**

(72) Inventor: **Hirasawa, Yukinori Patent Dept. Dev. Div.
Hamura, R&D Center CASIO COMPUTER CO.LTD 3-2-1,
Sakae-cho, Hamura-machi Nishitama-gun
Tokyo 190-11 (JP)**
Inventor: **Umeda, Osamu Patent Dept. Dev. Div. Hamura,
R&D Center CASIO COMPUTER CO.LTD 3-2-1,
Sakae-cho, Hamura-machi Nishitama-gun
Tokyo 190-11 (JP)**

(74) Representative: **Patentanwälte Grünecker, Kinkeldey,
Stockmair & Partner, Maximilianstrasse 58,
D-8000 München 22 (DE)**

(54) **Color liquid crystal projector.**

(57)    A color liquid crystal projector has red, green and blue image projection devices (3R, 3G, 3B) for projecting images corresponding to red, green and blue images. Each image projection device has a liquid crystal display panel (10), a red, green or blue lamp (24R, 24G, 24B) for coloring an image displayed on the liquid crystal panel with corresponding color, and projection lenses (9) for projecting the image displayed onto a screen (30).

EP 0 188 804 A2

ACTORUM AG

- 1 -

Color liquid crystal projector

The present invention relates to an improvement in a color liquid crystal projector for displaying an image using a dot-matrix display panel.

A color liquid crystal display projector displays an image using a dot-matrix display panel, and projects the displayed color image onto a screen. Conventionally, two types of color liquid crystal projectors for projecting a color image are known. One type uses color filters of the primary colors of red, green and blue, and the other type uses three liquid crystal display panels, layered one on top of the other, to display red, green and blue images, respectively.

In the former type of color liquid crystal projector, red, green and blue color filters are arranged in a given order on an electrode corresponding to each pixel. Thus, colors represented by combinations of colors of red, green and blue passed through the corresponding color filters are visually sensed as a color image. However, since the three filters are arranged on a region corresponding to one pixel, assuming that the pixel size and pitch remain the same, resolution is reduced to 1/3 that of a monochrome, dot-matrix, liquid crystal display panel. Thus, a color liquid crystal projector using such a color liquid crystal display panel undesirably provides a low-quality image when enlarged and projected on a screen surface by a projection lens.

In color liquid crystal projectors of the latter type, using three color liquid crystal display panels, layered one on top of the other, light emitted from a light source disposed on a back surface of the display member passes through the three panels, the light is absorbed three times by a dichroic dye added to the liquid crystal material in each panel, thus darkening the image projected onto a screen.

The present invention has been produced in consideration of the above problems, and has, as its object, to provide a color liquid crystal projector which can project a high density, bright color image onto a screen without degrading resolution.

In order to achieve the above object, the color liquid crystal projector of the present invention comprises:

red image projecting means including first liquid crystal display panel means, means for coloring an image displayed on the first liquid crystal display panel means, in red, and projection lens means for projecting the display image colored in red onto a screen;

green image projecting means including second liquid crystal display panel means, means for coloring a display image displayed on the second liquid crystal display panel means, in green, and projection lens means for projecting the display image colored in green onto the screen to overlap the red image; and

blue image projecting means including third liquid crystal display panel means, means for coloring a display image displayed on the third liquid crystal display panel means, in blue, and projection lens means for projecting the display image colored in blue onto the screen to overlap the red and green images.

With the above arrangement, the color liquid crystal projector of the present invention can combine color images on individual pixels of liquid crystal display panels of respective projection devices for three colors so as to project a color image on a screen. Thus, a color image with high resolution can be obtained. In addition, since each projection device has a single liquid crystal display panel, illuminating light will not be absorbed three times as in a conventional color liquid crystal projector which three color liquid crystal display panels, layered one on top of the other, are used. Therefore, a bright projection image can be formed on the screen.

This invention can be more fully understood from the following detailed description when taken in conjunction with the accompanying drawings, in which:

Fig. 1 is a cross sectional plan view showing a color liquid crystal projector according to an embodiment of the present invention;

Fig. 2 is a longitudinal sectional view of the embodiment shown in Fig. 1;

Fig. 3 is a front view of a liquid crystal display unit shown in Fig. 1;

Fig. 4 is a bottom view of the liquid crystal display unit shown in Fig. 3;

Fig. 5 is a sectional view taken along line A - A of Fig. 3 when viewed in the direction of arrow A;

Fig. 6 is a sectional view taken along line B - B of Fig. 3 when viewed in the direction of arrow B;

Fig. 7 is a cross sectional plan view showing a color liquid crystal projector according to another embodiment of the present invention; and

Fig. 8 is a longitudinal sectional view of the embodiment shown in Fig. 7.

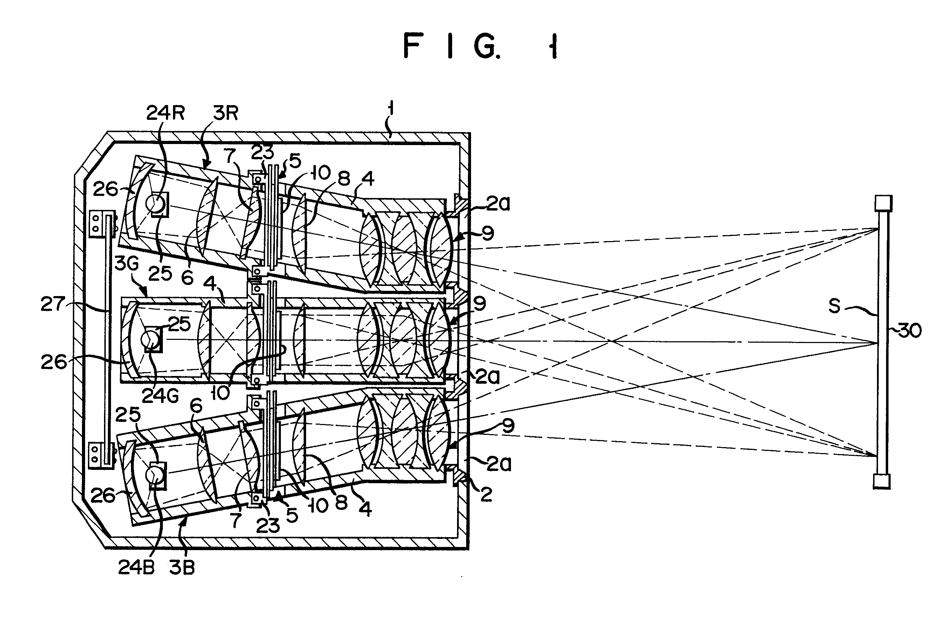

A portable, compact, color liquid crystal projector for projecting a television image onto a screen will, as an embodiment of the present invention, be described with reference to Figs. 1 to 6.

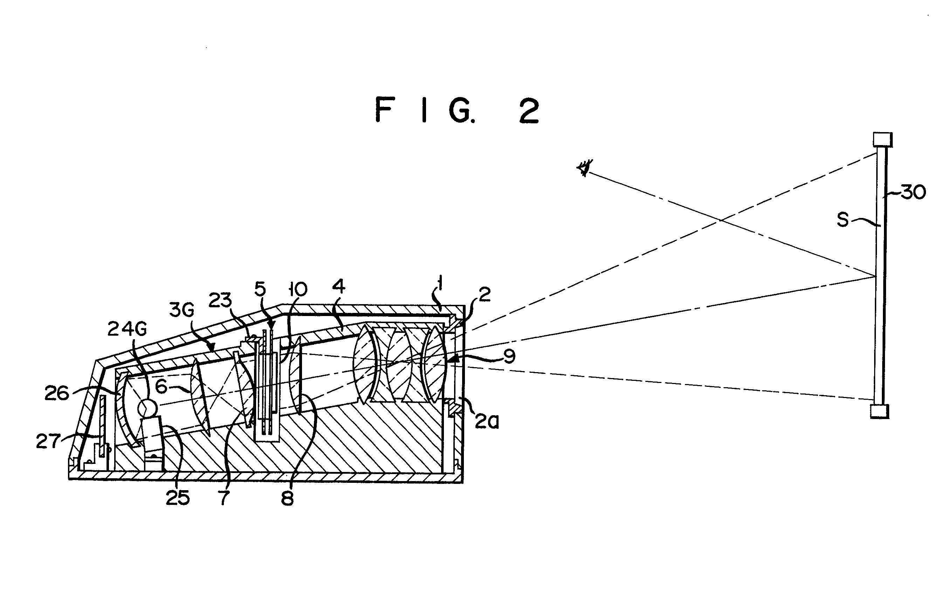

Referring to Figs. 1 and 2, reference numeral 1 denotes a projector case having a laterally elongated opening in its front surface. Front panel 2, having three laterally aligned image projection windows 2a, is mounted in the opening of case 1.

Reference numerals 3R, 3G and 3B denote three laterally aligned projection devices provided in case 1. First projection device 3R serves as a red image projection device for projecting a red image onto surface S of screen 30. Second projection device 3G serves as a green image projection device for projecting a green image onto surface S of screen 30, and third projection device 3B serves as a blue image projection device for projecting a blue image onto surface S of screen 30.

In each of devices 3R, 3G and 3B, liquid crystal display unit 5 is provided in substantially the central portion of lens barrel 4. In addition, in barrel 4, condensor lens 6, collimator lens 7, relay lens 8, and projection lenses 9, as a combined plurality of lenses, are provided. Lenses 6 and 7 are provided at the back surface side of unit 5. Lenses 8 and 9 are provided at the front surface side of unit 5.

Referring to Figs. 1 and 2, reference numerals 24R, 24G and 24B denote light source lamps, each of which is provided in its corresonding barrel 4 to illuminate the rear surface of transmission type, dot-matrix, liquid crystal display panel 10 of unit 5. Lamp 24R of device 3R is a red lamp for emitting red light, lamp 24G of device 3G is a green lamp for emitting green light, and lamp 24B of device 3B is a blue lamp for emitting blue light. Note that reference numerals 25 denote lamp sockets.

Reference numerals 26 denote concave reflection mirrors provided at the proximal ends of barrels 4. Light emitted from lamps 24R, 24G and 24B is reflected by mirrors 26, and projected onto surface S of screen 30 through lenses 6 and 7, panel 10, and lenses 8 and 9.

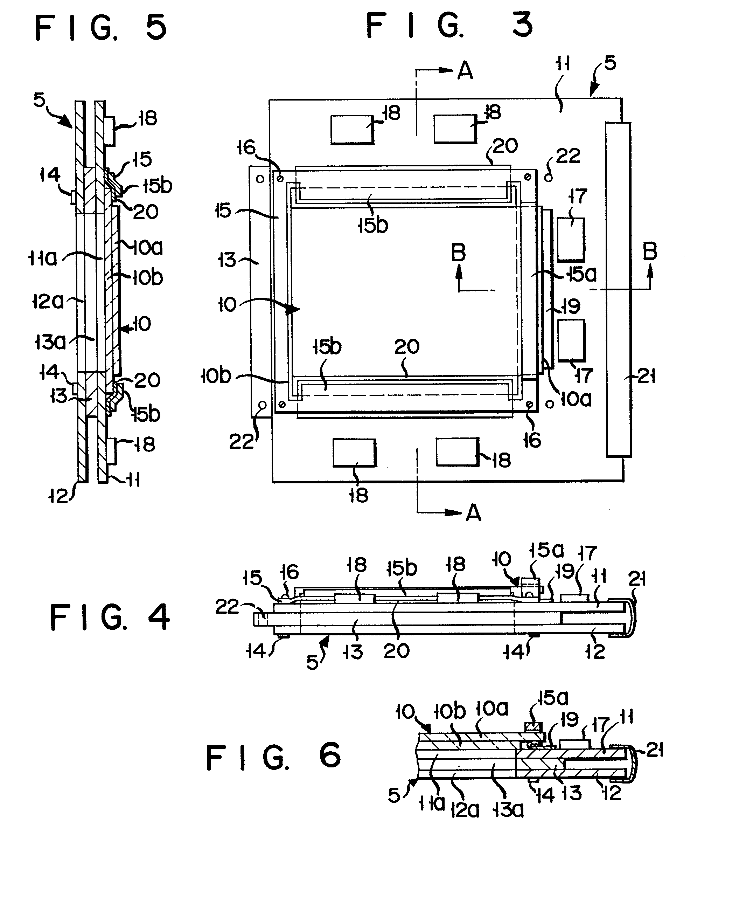

Figs. 3 to 6 show liquid crystal display unit 5.

Unit 5 comprises monochrome, transmission type, dot-matrix, liquid crystal display panel 10, and two printed circuit boards 11 and 12 for driving a display. Boards 11 and 12 are fixed on either side of holder plate 13 by screws 14. Panel 10 is provided on an outer surface of board 11, and is fixed by panel fixing frame 15 which is itself fixed to board 11 by screws 16. Boards 11 and 12 and plate 13 are of a frame-like shape having rectangular openings 11a, 12a and 13a, respectively, in portions corresponding to a display region of panel 10.

A plurality of parallel, transparent, scanning or common electrodes (not shown) are formed on one substrate in and of panel 10, e.g., on an inner surface of front surface of substrate 10a, and a plurality of transparent signal or segment electrodes (not shown) are formed on an inner surface of the back surface of substrate 10b, perpendicularly to the common electrodes. Note that panel 10 is of a negative display type which does not transmit light in an inactive state, and is also of a double matrix type. Terminals (not shown) of the respective scanning electrodes are arranged on one edge portion of substrate 10a, and terminals (not shown) of respective signal electrodes are arranged on two edge portions of substrate 10b.

Board 11, with panel 10 mounted thereon, serves as a drive printed circuit board for driving panel 10. Two scanning LSI chips 17 are mounted on board 11 near the scanning terminal edge portion of substrate 10a of panel 10. In addition, two display drive LSI chips 18 are mounted on board 11 near each signal electrode, terminal edge portion of substrate 10b of panel 10.

The scanning electrode terminals of panel 10 are connected to LSI chips 17 by connecting the terminal edge portion of substrate 10a with board 11 by means of heat-seal connector 19 (Fig. 6). The signal electrode terminals of panel 10 are connected to LSI chips 18 by connecting the terminal edge portions of substrate 10b with board 11 by means of heat-seal connectors 20.

Frame 15 has a rectangular shape. Frame side portion 15a at one side of frame 15 covers the terminal edge portion of substrate 10a of panel 10. Panel holding portions 15b for holding the signal electrode, terminal edge portions firmly are formed at two frame side portions perpendicular to portion 15a. Portions 15b hold the signal electrode terminal edge portions through connectors 20 so as to fix them to board 11.

Board 12 serves as an A/D converter circuit board for converting a television image signal (analog signal) into a digital signal. Boards 11 and 12 are connected at one side by means of heat-seal connector 21 which is arranged along a portion of the side edges of the boards.

Reference numerals 22, shown in Fig. 3, denote lens barrel mounting holes. Unit 5 is mounted on display unit mounting frame 23 by utilizing holes 22, as shown in Figs. 1 and 2. Frame 23 is fixed to barrel 4 by screws, thus mounting unit 5 to barrel 4.

Since panel 10 is of the negative display type, light passes through only a selectively driven portion of panel 10. An optical color image corresponding to a color image displayed on the driven portion of panel 10 is formed on surface S of screen 30.

Barrels 4 of devices 3R and 3B are inclined so as to approach central device 3G at the front side, as shown in Fig. 1, so that projected color images from all the devices accurately overlap each other on surface S of screen 30. In addition, barrels 4 of devices 3R, 3G and 3B are inclined upward at their front end sides, as shown in Fig. 2, so as to project color display images onto surface S of screen 30 which is upwardly inclined with respect to the projector.

Reference numeral 27 denotes a linear circuit board provided in case 1. Board 27 is connected to board 12 of unit 5 (Figs. 4, 5 and 6) through a connection cable (not shown). Board 27 is connected to a receiver unit comprising a tuning circuit, a voice amplifier, loudspeaker, and the like which, though not shown, is either provided in case 1 or separately arranged.

Projection of a television image onto surface S of screen 30 by the color liquid crystal projector will be explained hereinafter. Since device 3R uses red lamp 24R as a light source lamp, a color image displayed on panel 10 is colored in the illuminating light color of lamp 24R, i.e., in red. Therefore, a red image, enlarged by projection lens 9, is projected from device 3R onto surface S of screen 30.

Since device 3G uses green lamp 24G as a light source lamp, its color image displayed on panel 10 is colored in green. Therefore, a green image, enlarged by lens 9, is projected from device 3G onto surface S of screen 30. Similarly, since device 3B uses blue lamp 24B as a light source lamp, its color image displayed on panel 10 is colored in blue. Therefore, a blue image, enlarged by lens 9, is projected from device 3B onto surface S of screen 30.

Devices 3R, 3G and 3B are provided so that the red, green and blue images projected from the devices overlap each other on surface S of screen 30. As a result, an image of a desired color is formed on surface S of screen 30 by the combination of these three color images.

It should be noted that screen 30 can be arranged separated from the projector by a given distance by setting it on a screen support frame (not shown) detachably mounted on case 1 of the projector. The color liquid crystal projector, together with the screen support frame and screen 30, can be portable if the screen support frame is demounted from the projector and screen 30 is demounted from the support frame.

In this color liquid crystal projector, since red, green and blue images projected from devices 3R, 3G and 3B, respectively, overlap on surface S of screen 30, high resolution liquid crystal display panels for displaying images formed by individual pixels can be used in panels 10 of devices 3R, 3G and 3B.  For this reason, when compared with a conventional projector using color liquid crystal display panels for displaying a color image using three primary color filters, an image having considerably higher resolution can be projected on surface S of screen 30.  In addition, since each of devices 3R, 3G and 3B needs only single panel 10, illuminating light will not be absorbed three times as in a conventional projector using a liquid crystal display member in which three liquid crystal display panels are layered one on top of the other.  Therefore, a bright projection image can be projected onto surface S of screen 30.

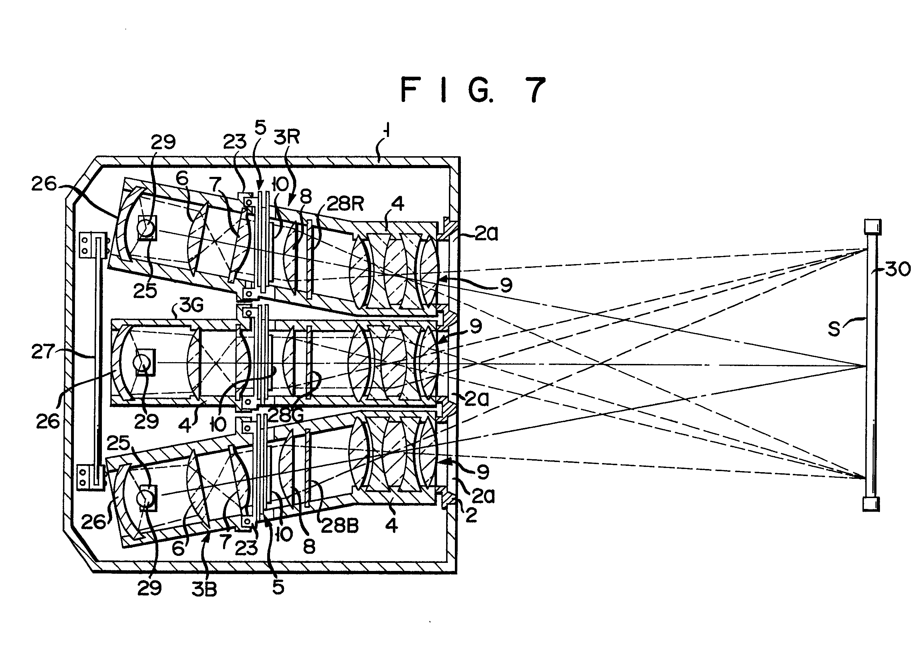

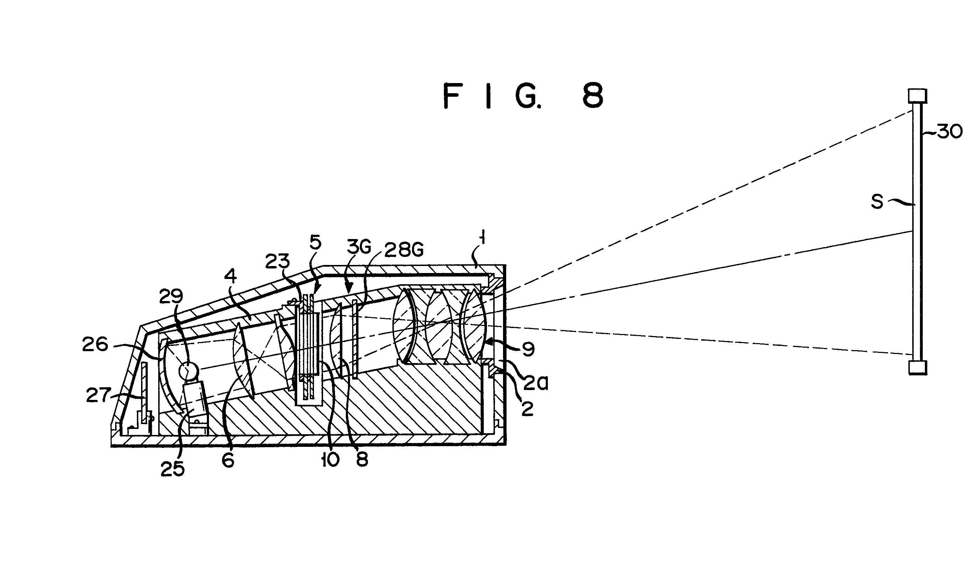

Figs. 7 and 8 show another embodiment of the present invention.  In this embodiment, red filter 28R, for coloring a display image on liquid crystal display panel 10 in red, is provided in mirror barrel 4 of red projection device 3R.  Green filter 28G, for coloring a display image on panel 10 in green, is provided in barrel 4 of green projection device 3G, and blue filter 28B, for coloring a display image on panel 10 in blue, is provided in barrel 4 of blue projection device 3B. Light source lamps 29 of devices 3R, 3G and 3B are white lamps, while the nature of the other devices is the same as that in the first embodiment.

In this embodiment color filters 28R, 28G and 28B of devices 3R, 3G and 3B, respectively, are provided between relay lenses 8 and projection lenses 9.  However, filters 28R, 28G and 28B can be placed as desired. Filters 28R, 28G and 28B need not be provided separate from panels 10, but can be built thereinto (in this case, color filters can be provided on either the outer or inner surface of the substrate of panel 10).

In this embodiment, light source lamps 29 are provided for respective devices 3R, 3G and 3B. Instead, a single light source lamp can be used, and panels 10 of devices 3R, 3G and 3B can be illuminated using reflecting plates. When a single light source lamp is used, a lamp suitable for all the color filters is preferable. However, since it is difficult to select a light source suitable for all color filters, light efficiency is impaired, and luminance of an image on surface S of screen 30 is degraded to a certain extent. Therefore, when display images on panel 10 are colored by color filters, light source lamps 29 most suitable for their corresponding color filters of devices 3R, 3G and 3B should ideally, be provided.

In the above embodiments, in order to color a display image of panel 10, a color light source lamp or a color filter is used. Alternatively, color lenses can be used, or dichroic dye can be added to the liquid crystal material of panel 10, thus using panel 10 as a GH type liquid crystal display panel.

In the above embodiments, the color liquid crystal projector for projecting a television image onto screen surface S has been described. However, the present invention can be applied to a monitor of a VTR (video tape recorder) or a projector for projecting an enlarged frame image from a game machine onto a screen.

Claims:

1.  A color liquid crystal projector for displaying
a color image in combinations of red, green and blue
images, characterized in that there are further provided
red image projecting means (3R) including first liquid
crystal display panel means (10), red coloring means
(24R) for coloring an image displayed on said first
liquid crystal display panel means (10), in red, and
projection lens means (9) for projecting the image
colored in red onto a screen;

green image projecting means (3G) including second
liquid crystal display panel means (10), green coloring
means (24G) for coloring an image displayed on said
second liquid crystal display panel means (10), in
green, and projection lens means (9) for projecting the
image colored in green onto the screen to overlap the
red image; and

blue image projecting means (3B) including third
liquid crystal display panel means (10), blue coloring
means (24B) for coloring an image displayed on said
third liquid crystal display panel means, in blue, and
projection lens means (9) for projecting the image
colored in blue onto the screen to overlap the red and
green images.

2.  A projector according to claim 1, characterized
in that said red coloring means is a red lamp (24R),
said green coloring means is a green lamp (24G) and said
blue coloring means is a blue lamp (24B).

3.  A projector according to claim 1, characterized
in that said red coloring means is a red color filter
(28R), said green coloring means is a green color filter
(28G), and said blue coloring means is a blue color
filter (28B).

4.  A projector according to claim 3, characterized
in that each of said red, green and blue color filters
is provided between said liquid crystal display panel means (10) and said projection lens means (9) corresponding thereto.

    5.  A projector according to claim 3, characterized
in that each of said red, green and blue color filters
(28R, 28G, 28B) is built into said liquid crystal
display panel means (10) corresponding thereto.

FIG. 1

F I G. 2

FIG. 5

FIG. 3

FIG. 4

FIG. 6

F I G. 7

# F I G. 8